# EUROPEAN PATENT SPECIFICATION

(11) **EP 3 890 089 B1**
(45) Date of publication and mention of the grant of the patent: **27.09.2023**
(21) Application number: 20801533.9
(22) Date of filing: 11.04.2020
(51) Int. Cl.: H01M 10/052, H01M 10/054, H01M 10/056, H01M 10/0567, H01M 4/40, H01M 10/0568, H01M 10/0569, H01M 10/42, H01M 4/46, H01M 4/134

(54) **LITHIUM METAL BATTERY**
LITHIUM-METALL-BATTERIE
BATTERIE AU MÉTAL LITHIUM

(30) Priority: 08.05.2019 CN 201910383572
(43) Date of publication of application: 06.10.2021
(73) Proprietor: Contemporary Amperex Technology Co., Limited, Fujian PRC 352100 (CN)
(72) Inventor: CHENG, Meng, Ningde, Fujian 352100 (CN); LIU, Chengyong, Ningde, Fujian 352100 (CN); HU, Bobing, Ningde, Fujian 352100 (CN); GUO, Yongsheng, Ningde, Fujian 352100 (CN); FU, Jiawei, Ningde, Fujian 352100 (CN); LI, Qian, Ningde, Fujian 352100 (CN); LIANG, Chengdu, Ningde, Fujian 352100 (CN)
(74) Representative: Gong, Jinping
(86) International application number: PCT/CN2020/084345
(87) International publication number: WO 2020/224382

(56) References cited:
- EP-A1- 2 430 686
- EP-A2- 1 518 287
- WO-A1-2019/042741
- CN-A- 105 261 790
- CN-A- 109 390 587
- KR-A- 20180 031 249
- US-A1- 2014 227 584

## Description

### TECHNICAL FIELD

This application relates to the battery field, and in particular, to a lithium metal battery as specified in any of claims 1-7 and an apparatus as specified in claim 8.

### BACKGROUND

Lithium-ion batteries (LIBs for short) are widely used in the field of electronic products due to their advantages such as high voltage, high specific energy, and long cycle life. With increasing demand for energy storage of new energy vehicles, wind energy, solar energy, and the like, requirements for lithium-ion batteries are increasingly high. At present, commercial lithium-ion batteries have gradually been unable to meet the demand for energy storage.

Lithium metal has ultrahigh theoretical specific capacity (3860 mAh/g) and extremely low electrochemical potential, and lithium metal batteries (LMBs for short) with the lithium metal as anode have ultrahigh theoretical energy density. Therefore, lithium metal batteries are one of the most promising next-generation storage devices providing high energy density to meet stringent requirements of emerging industries.

The behavior of lithium ions in LMBs is completely different from the intercalation/deintercalation behavior of lithium ions in LIBs. Generally, the lithium ions obtain electrons from an external circuit and then are directly deposited on the surface or underneath of a negative electrode in the form of lithium metal particles during charging. During the deposition of lithium ions, uneven deposition may cause a series of problems, for example, volume swelling of the lithium metal negative electrode during charging and discharging, increasing consumption of the electrolytic solution and reducing cycle performance of the battery. In addition, non-compact deposition of the lithium metal may lead to the growth of dendrites in the deposited lithium during cycling, and in severe case, may cause safety problems such as fire. This seriously hinders the commercialization of lithium metal batteries.

US2014/227584 A1 describes fluorinated electrolyte compositions.

WO2019/042741 A1 states a fluorinated liquid electrolyte for electrochemical cells having a lithium metal anode.

EP1518287 A2 relates to a nonaqueous electrochemical cell with improved energy density. EP2430686 A1 describes an additive for lithium ion rechargeable battery cells.

KR 20180031249 A concerns an electrolyte for a lithium secondary battery, and a lithium secondary battery including the electrolyte.

### SUMMARY

This application is intended to provide a lithium metal battery as specified in any of claims 1-7 and an apparatus as specified in claim 8 to resolve at least one of the technical problems mentioned above.

To achieve the foregoing objective, the following technical solutions are used in this application:
A lithium metal battery according to the claimed invention includes:
a positive electrode, a negative electrode, a separator disposed between the positive electrode and the negative electrode, and an electrolytic solution infiltrating the separator, where
the negative electrode includes a negative electrode current collector and a lithium-aluminum alloy layer composited on at least one surface of the negative electrode current collector; and
the electrolytic solution includes an electrolyte and a solvent, where the solvent contains a film-forming agent, and the film-forming agent includes FEC (fluoroethylene carbonate) and/or DFEC (bisfluoroethylene carbonate);
wherein a mass percentage of the film-forming agent in the solvent is 15% to 55%;
wherein the solvent is a combination of one or more of ethylene carbonate, propylene carbonate, butylene carbonate, prenyl carbonate, dimethyl carbonate, diethyl carbonate, dipropyl carbonate, ethyl methyl carbonate and a halogenated derivative thereof;
the electrolyte includes LiFSI and/or LiTFSI; and,
wherein thickness of the lithium-aluminum alloy layer is 10 µm to 40 µm.

In some embodiments, a mass percentage of aluminum in the lithium-aluminum alloy layer is 0.1% to 3%, preferably 0.3% to 2%, and particularly 0.3% to 0.8%.

In some preferred embodiments, an adhesion strength between the lithium-aluminum alloy layer and the negative electrode current collector is ≥ 0.01 N/mm.

In some embodiments, thickness of the lithium-aluminum alloy layer is 15 µm to 30 µm, and particularly 15 µm to 25 µm.

In some embodiments, a mass percentage of the film-forming agent in the solvent is 20% to 40%.

In some embodiments, a molar concentration of the electrolyte in the electrolytic solution is 0.5 mol/L to 6 mol/L, preferably 0.8 mol/L to 4 mol/L, and particularly 1 mol/L to 2 mol/L.

In some embodiments, the surface of the negative electrode includes Li₃N and/or LiF after the lithium metal battery is formatted.

In some embodiments, the surface of the negative electrode includes Li₃N and LiF after the lithium metal battery is formatted.

In some embodiments, the surface of the negative electrode further includes lithium oxynitride after the lithium metal battery is formatted.

A second aspect of this application provides an apparatus, where the apparatus includes the lithium metal battery according to the first aspect of this application.

The technical solutions provided in this application can achieve the following beneficial effects:

By using a lithium-aluminum alloy as a negative electrode material, the lithium metal battery provided by the embodiments of this application allows significantly more uniform and compact deposition of lithium ions during charging, thereby reducing volume swelling of the lithium metal negative electrode during charging. It also makes a smaller contact area between the lithium metal negative electrode and the electrolytic solution, thereby reducing consumption of the electrolytic solution and improving cycle performance of the lithium metal battery. In addition, as using the lithium-aluminum alloy as the negative electrode material allows more uniform and compact deposition of lithium ions, the lithium metal negative electrode has a better structural stability during charge and discharge cycles, thereby improving safety of the lithium metal battery.

In addition, FEC and/or DFEC used as the main film-forming agent are more likely to produce LiF products that are insoluble in the electrolytic solution at an interface between the lithium-aluminum alloy layer and the electrolytic solution. The LiF products can inhibit further side reactions between the electrolytic solution and the lithium-aluminum alloy layer, thereby improving safety and stability of the lithium metal battery.

In summary, the lithium metal battery provided in the embodiments of this application can improve the uniformity of deposition and dissolution of lithium, and form a stable interface film on an alloy surface with the film-forming agent FEC/DFEC. The combined action of the lithium-aluminum alloy and the film-forming agent can effectively inhibit side reactions, thereby effectively improving the safety and stability of the lithium metal battery. The apparatus in this application includes the lithium metal battery, and therefore provides at least the same advantages as the lithium metal battery.

It should be understood that the foregoing general descriptions and the following detailed descriptions are illustrative only, and do not constitute any limitation on this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic diagram of an embodiment of a lithium metal battery.
FIG. 2 is an exploded view of FIG. 1.
FIG. 3 is a schematic diagram of an embodiment of a battery module.
FIG. 4 is a schematic diagram of an embodiment of a battery pack.
FIG. 5 is an exploded view of FIG. 4.
FIG. 6 is a schematic diagram of an embodiment of an apparatus using a lithium metal battery as a power source.

Reference signs are described as follows:
1. battery pack;
2. upper box body;
3. lower box body;
4. battery module; and
5. lithium metal battery.

### DESCRIPTION OF EMBODIMENTS

The implementation solutions of this application will now be described in detail with reference to the embodiments. However, persons skilled in the art will understand that the following embodiments are merely intended to illustrate this application but not to limit the scope of this application. Embodiments, where specific conditions are not specified, are implemented in accordance with general conditions or those recommended by a manufacturer. The reagents or instruments used are all conventional products that can be purchased on the market if no manufacturer is indicated.

It should be noted that in this application, unless otherwise particularly specified, all the embodiments and preferred implementations mentioned in this specification can be combined to form a new technical solution. In this application, unless otherwise particularly specified, all technical features and preferred features mentioned in this specification can be combined to form a new technical solution. In this application, unless otherwise particularly specified, percentages (%) or parts refer to percentages or parts by weight, or percentages or parts by mass with respect to composition. In this application, unless otherwise particularly specified, the involved components or their preferred components can be combined to form a new technical solution. In this application, unless otherwise specified, the numerical range "a to b" represents an expression for short of any combination of real numbers in the range of a to b, where both a and b are real numbers. For example, a numerical range "6 to 22" means that all real numbers in the range of "6 to 22" have been listed in this specification, where "6 to 22" is only a short expression of these numerical combinations. A "range" in this application is expressed by a lower limit and an upper limit, where there may be one or more lower limits and one or more upper limits. In this application, unless otherwise specified, the reactions or operation steps can be performed sequentially or in a specified order. Preferably, the reaction method herein is sequential.

Unless otherwise specified, the technical and scientific terms used herein have the same meanings as are familiar to persons skilled in the art. In addition, any method or material that is similar or equivalent to what is recorded can also be applied to this application.

### Lithium metal battery

A first aspect of the invention provides a lithium metal battery, including:
a positive electrode, a negative electrode, a separator disposed between the positive electrode and the negative electrode, and an electrolytic solution infiltrating the separator, where
the negative electrode includes a negative electrode current collector and a lithium-aluminum alloy layer composited on at least one surface of the negative electrode current collector; and
the electrolytic solution includes an electrolyte and a solvent, where the solvent contains a film-forming agent, and the film-forming agent is FEC and/or DFEC.

In the lithium metal battery, thickness of a SEI film is associated with volume swelling. To be specific, greater volume swelling indicates that the SEI film is easier to be destroyed, and continuous destruction and repair of the SEI film may continuously increase the thickness of the SEI film. An excessively thick SEI film may in turn increase interface resistance, causing fading of voltage.

Through research, it is found that with a lithium-aluminum alloy as a negative electrode, the SEI film formed on the surface of the lithium-aluminum alloy is not easy to break, because the SEI film has a more stable and uniform structure, which makes deposition of lithium ions during charging more uniform and compact. Therefore, by using the lithium-aluminum alloy as a negative electrode material, the lithium metal battery provided by the embodiments of this application allows significantly more uniform and compact deposition of lithium ions during charging, thereby reducing volume swelling of the lithium metal negative electrode during charging.

In addition, non-uniform and non-compact deposition of lithium may lead to a relatively large specific surface area of the deposited lithium metal. Hence, a contact area between the deposited lithium metal and the electrolytic solution is large, leading to excessive consumption of the electrolytic solution during charging and discharging. In the embodiments of this application, as using the lithium-aluminum alloy as the negative electrode allows more uniform deposition of lithium, the contact area between the lithium metal negative electrode and the electrolytic solution can be effectively reduced, thus reducing the consumption of the electrolytic solution, and improving cycle performance of the lithium metal battery. In addition, as using the lithium-aluminum alloy as the negative electrode material allows more uniform and compact deposition of lithium ions, the lithium metal negative electrode has better structural stability during charge and discharge cycles, thereby improving safety of the lithium metal battery.

In the embodiments of this application, the film-forming agent may be fluoroethylene carbonate (FEC for short), bisfluoroethylene carbonate (DFEC for short), or a combination of FEC and DFEC. In addition, FEC and/or DFEC used as the main film-forming agent are more likely to produce LiF products that are insoluble in the electrolytic solution at an interface between the lithium-aluminum alloy layer and the electrolytic solution. The LiF products can inhibit further side reactions between the electrolytic solution and the lithium-aluminum alloy layer, thereby improving safety and stability of the lithium metal battery.

It should be noted that the film-forming agents FEC and DFEC in the embodiments of this application are essentially solvents. In the embodiments of this application, FEC and DFEC have film-forming effects and are therefore called film-forming agents to distinguish from other solvents. However, FEC and DFEC are essentially solvents and form a complete solvent system together with other solvents in the electrolytic solution.

It can be seen that the lithium metal battery provided in the embodiments of this application allows more uniform deposition and dissolution of lithium, and forms a stable interface film on the alloy surface with the film-forming agent FEC and/or DFEC. The combined action of the lithium-aluminum alloy and the film-forming agent can effectively inhibit side reactions, thereby effectively improving the safety and stability of the lithium metal battery.

### [Positive electrode]

In the embodiments of this application, the positive electrode is not specifically limited, and can be prepared by using a conventional positive electrode material. For example, a structure of the positive electrode includes a positive electrode current collector and a positive electrode material layer arranged on a surface of the positive electrode current collector. The positive electrode material layer can be provided on one surface of the positive electrode current collector or on two surfaces of the positive electrode current collector. The positive electrode material layer may further include a positive electrode active substance, a binder, a conductive agent, and the like. There is no special limitation on the specific types of the positive electrode active substance, as long as it can accept and release lithium ions. The positive electrode active substance can be either a layered structural material to diffuse lithium ions in a two-dimensional space, or a spinel structure to diffuse lithium ions in a three-dimensional space. Specifically, the positive electrode active substance can be preferably selected from a combination of one or more of lithium cobalt oxide, lithium nickel oxide, lithium manganese oxide, lithium nickel manganese oxide, lithium nickel cobalt manganese oxide, lithium nickel cobalt aluminum oxide, and olivine-type lithium-containing phosphate.

The binder and the conductive agent in the positive electrode are not limited to any specific types or amounts, but may be selected according to actual needs.

The binder typically includes fluorine-containing polyolefin binders, where the fluorine-containing polyolefin binders include but are not limited to polyvinylidene fluoride (PVDF), vinylidene fluoride copolymer, or their modified (for example, modified by carboxylic acid, acrylic acid, or acrylonitrile) derivatives. In the positive electrode material layer, the amount of the binder used cannot be excessively high due to poor conductivity of the binder itself. Preferably, the mass percentage of the binder in the positive electrode active substance layer is less than or equal to 2 wt% so as to obtain relatively low impedance of the electrode plate.

The conductive agent may be a variety of conductive agents applicable to lithium-ion (secondary) batteries in the field, for example, may include but is not limited to a combination of one or more of acetylene black, conductive carbon black, vapor grown carbon fiber (VGCF), carbon nanotube (CNT), Ketjen black, or the like. The weight of the conductive agent may account for 1 wt% to 10 wt% of the total weight of the positive electrode material layer.

In the positive electrode plate, the positive electrode current collector is also not limited to any specific type, but may be selected according to actual needs. The positive electrode current collector may typically be layered, and the positive electrode current collector is typically a structure or component that can collect current. The positive electrode current collector may be various materials suitable to be used as the positive electrode current collector of an electrochemical energy storage apparatus in the art. For example, the positive electrode current collector may include but is not limited to a metal foil, and more specifically, may include but is not limited to a nickel foil or an aluminum foil.

### [Negative electrode]

In the embodiment of this application, a negative electrode in the lithium metal battery is made with a lithium-aluminum alloy as a negative electrode material layer. The lithium-aluminum alloy layer can be provided on one surface of a negative electrode current collector or on two surfaces of the negative electrode current collector.

The negative electrode current collector in the embodiments of this application may include but is not limited to a metal foil, and more specifically, may include but is not limited to a nickel foil or an aluminum foil.

### [Separator]

The separator may be of various materials suitable for electrochemical energy storage apparatuses in the field, for example, may include but is not limited to a combination of one or more of polyethylene, polypropylene, polyvinylidene fluoride, aramid, polyethylene terephthalate, polytetrafluoroethylene, polyacrylonitrile, polyimide, polyamide, polyester, and natural fiber.

### [Electrolytic solution]

The electrolytic solution typically includes an electrolyte and a solvent. In the embodiments of this invention LiFSI and/or LiTFSI are selected as the electrolyte.

The solvent may be various solvents suitable for the electrolytic solution of electrochemical energy storage apparatuses in the field. The solvent of the claimed electrolytic solution is a combination of one or more of ethylene carbonate, propylene carbonate, butylene carbonate, prenyl carbonate, dimethyl carbonate, diethyl carbonate, dipropyl carbonate, ethyl methyl carbonate and a halogenated derivative thereof.

In some embodiments of this application, a mass percentage of aluminum in the lithium-aluminum alloy layer is 0.1% to 3%, preferably 0.3% to 2%, and particularly 0.3% to 0.8%. In this embodiment, the mass percentage of aluminum, typically but not limitedly, may be, for example, 0.1%, 0.2%, 0.3%, 0.4%, 0.5%, 0.6%, 0.8%, 1%, 1.2%, 1.4%, 1.6%, 1.8%, 2%, 2.5%, or 3%.

The aluminum content in this range can ensure that charge and discharge potentials of the negative electrode of the lithium-aluminum alloy are closer to a potential of pure lithium and has no effect on overall energy density of a battery cell, and can further ensure that lithium-aluminum alloy strips are machinable.

In addition, when the mass percentage of aluminum is 0.1% to 3%, it can further ensure that an adhesion strength between the lithium-aluminum alloy layer and the negative electrode current collector is ≥ 0.01 N/mm. Therefore, optimizing the aluminum content in the lithium-aluminum alloy layer can ensure that the lithium-aluminum alloy has good extensibility, and that the lithium-aluminum alloy has good affinity with the negative electrode current collector, making the lithium-aluminum alloy have a good connection with the negative electrode current collector, thereby ensuring good electron transmission between the lithium-aluminum alloy layer and the negative electrode current collector.

According to the invention, thickness of the lithium-aluminum alloy layer is 10 µm to 40 µm, preferably 15 µm to 30 µm, and particularly 15 µm to 25 µm. The thickness of the lithium-aluminum alloy layer, typically but not limitedly, may be, for example, 10 µm, 15 µm, 20 µm, 25 µm, 30 µm, 35 µm, or 40 µm.

Setting the thickness of the lithium-aluminum alloy layer to 10 µm to 40 µm can not only ensure that the lithium-aluminum alloy layer has a strong anti-pulverization ability, but also maintain a relatively high energy density of the battery cell as a whole.

According to the invention, a mass percentage of the film-forming agent in the solvent is 15% to 55%, and particularly 20% to 40%. In this embodiment, the mass percentage of the film-forming agent in the solvent may be, for example, 15%, 20%, 25%, 30%, 40%, 50%.

As the lithium-aluminum alloy is used as the negative electrode, the side reaction between the lithium-aluminum alloy with the electrolytic solution will be reduced. Therefore, in the embodiments of this application, the amount of the film-forming agent added can be appropriately reduced. In the solvent, maintaining a low film-forming agent content may further improve infiltration of the electrolytic solution to the separator and the electrode plate, and reduce polarization, thereby increasing discharge voltage and energy density.

According to the invention, the electrolyte is LiFSI and/or LiTFSI. The electrolyte may be lithium bisfluorosulfonylimide (LiFSI for short), lithium bistrifluoromethanesulfonimide (LiTFSI for short), or a combination of LiFSI and LiTFSI.

In comparison with a pure lithium negative electrode, LiFSI and LiTFSI used as the electrolyte are more likely to decompose on the surface of the lithium-aluminum alloy to produce part of a LiF interface film and a stable Li₃N-LiNₓO_{y} interface film. The combined action of the LiF interface film and the Li₃N-LiNₓO_{y} interface film can effectively inhibit side reactions between the lithium metal negative electrode and the electrolytic solution, thereby further improving safety and stability of the lithium metal battery.

In some embodiments of this application, a molar concentration of the electrolyte in the electrolytic solution is 0.5 mol/L to 6 mol/L, preferably 0.8 mol/L to 4 mol/L, and particularly 1 mol/L to 2 mol/L. The molar concentration of the electrolyte, typically but not limitedly, may be, for example, 0.5 mol/L, 1 mol/L, 1.5 mol/L, 2 mol/L, 2.5 mol/L, 3 mol/L, 4 mol/L, 5 mol/L, or 6 mol/L.

Lithium salts LiFSI and/or LiTFSI, which are used as electrolytes, are also substances that provide SEI film components. In the embodiments of this application, by using the lithium-aluminum alloy as the negative electrode, volume swelling of the negative electrode material layer is reduced, the side reaction is reduced, and concentration of the lithium salt can be appropriately reduced, which can ensure electrical performance of the lithium metal battery and effectively reduce costs. In addition, using a low concentration of electrolyte can further improve infiltration of the electrolytic solution to the separator and the electrode plate, and reduce the polarization, thereby increasing the discharge voltage and energy density.

The preparation method of the lithium metal battery of this application is as follows. The positive electrode, the negative electrode, the separator, and the electrolytic solution are packaged to obtain the lithium metal battery.

Specifically, the preparation method provided in the embodiment of this application is the same as that of a conventional lithium metal battery. For example, the positive electrode, the negative electrode, the separator, and the electrolytic solution provided in the embodiment of the application can be used to make a wound lithium metal battery or a laminated lithium metal battery.

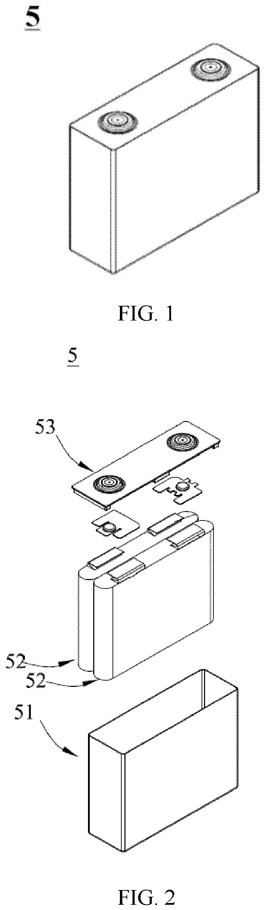

This application does not impose special limitations on the shape of the lithium metal battery, and the lithium metal battery may be cylindrical, square, or in any other shapes. FIG. 1 shows a lithium metal battery 5 of a square structure as an example.

The outer package of the lithium metal battery of this application may be a hard shell (for example, an aluminum shell or a steel shell) or a soft package (for example, a bag, whose material may be plastic, such as one or more of polypropylene PP, polybutylene terephthalate PBT, polybutylene succinate PBS, and the like).

In some embodiments, referring to FIG. 2, the outer package may include a housing 51 and a cover plate 53. The housing 51 may include a base plate and a side plate connected to the base plate, and the base plate and the side plate enclose an accommodating cavity. The housing 51 has an opening communicating with the accommodating cavity, and the cover plate 53 can cover the opening to close the accommodating cavity.

A positive electrode plate, a negative electrode plate, and a separator may be wound or laminated to form an electrode assembly. The electrode assembly is encapsulated in the accommodating cavity. The electrolytic solution infiltrates into the electrode assembly. FIG. 2 shows an embodiment of an electrode assembly indicated by 52.

There may be one or more electrode assemblies 52 in the lithium metal battery 5, and their quantity may be adjusted as required.

In some embodiments, lithium metal batteries may be combined into a battery module, and the battery module may include a plurality of lithium metal batteries. The specific quantity may be adjusted according to the use case and capacity of the battery module.

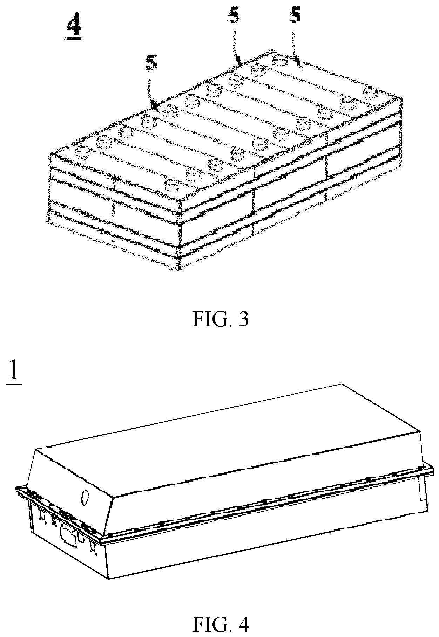

FIG. 3 shows a battery module 4 used as an example. Referring to FIG. 3, in the battery module 4, a plurality of lithium metal batteries 5 may be sequentially arranged in a length direction of the battery module 4. Certainly, the plurality of lithium metal batteries 5 may be arranged in any other manner. Further, the plurality of lithium metal batteries 5 may be fixed by using fasteners.

Optionally, the battery module 4 may further include a housing with an accommodating space, and the plurality of lithium metal batteries 5 are accommodated in the accommodating space.

In some embodiments, such battery modules may be further combined into a battery pack, and the quantity of battery modules included in the battery pack may be adjusted based on application and capacity of the battery pack.

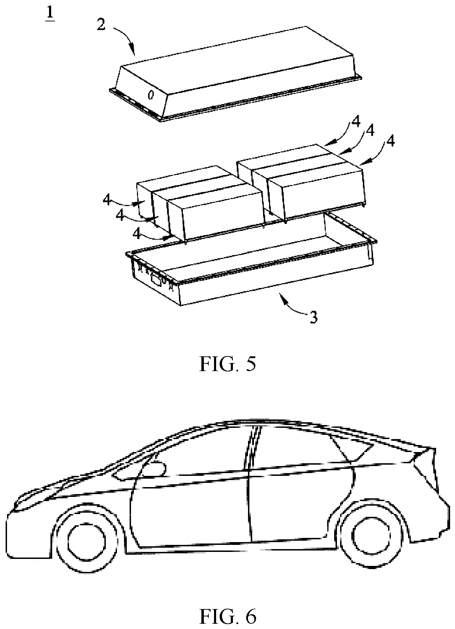

FIG. 4 and FIG. 5 show a battery pack 1 used as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

### Apparatus

A second aspect of this application provides an apparatus. The apparatus includes the lithium metal battery in the first aspect of this application. The lithium metal battery can be used as a power source for the apparatus. The apparatus in this application uses the lithium metal battery provided by this application, and therefore has at least the same advantages as the lithium metal battery.

The apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

A lithium metal battery, battery module, or battery pack may be selected for the apparatus according to requirements for using the apparatus.

FIG. 6 shows an apparatus used as an example. The apparatus is a battery electric vehicle, a hybrid electric vehicle, a plug-in hybrid electric vehicle, or the like. To meet requirements of the apparatus for high power and high energy density of the lithium metal battery, a battery pack or battery module may be used.

In another example, the apparatus may be a mobile phone, a tablet computer, a notebook computer, or the like. Such apparatus is generally required to be light and thin, and may use a lithium metal battery as its power source.

The following further describes beneficial effects of this application with reference to examples.

The lithium metal battery of this application will be further described in detail below with reference to examples and comparative examples.

### Example 1

This example is a lithium metal battery, and its structure is as follows:
Positive electrode: the positive electrode included an aluminum foil and a positive electrode material layer applied on a surface of the aluminum foil. The positive electrode material layer was made by a mixture of LiNi_{0.8}Mn_{0.1}Co_{0.1}O₂ (NCM811) as a positive electrode active material, carbon black SP as a conductive agent, and polyvinylidene fluoride as a binder with a weight ratio of 97:2:1.
Negative electrode: the negative electrode included an aluminum foil and a lithium-aluminum alloy layer composited on a surface of the aluminum foil, where a weight percentage of aluminum in the lithium-aluminum alloy layer was 0.1%, and thickness of the lithium-aluminum alloy layer was 20 µm.
Separator: the separator was a polyimide separator.
Electrolytic solution: the electrolytic solution included an electrolyte and a solvent, where the solvent was a combination of ethylene carbonate EC and dimethyl carbonate DMC at a mass ratio of 3:7, the electrolyte was LiFSI, and a molar concentration of the electrolyte was 1 mol/L. The electrolytic solution further included a medium film-forming agent DFEC. On the basis of the solvent, a mass percentage of the film-forming agent DFEC in the solvent was 30%.

The positive electrode, separator, and negative electrode are laminated in this order and packed, and then the electrolytic solution was injected, followed by sealing and technical conversion, to obtain a lithium metal battery.

### Examples 2 to 6

Examples 2 to 6 are each a lithium metal battery. They are the same as Example 1 except for a different amount of aluminum contained in the lithium-aluminum alloy layer. Their specific compositions are shown in Table 1.

### Examples 7 to 10

Examples 7 to 10 are each a lithium metal battery. They are the same as Example 4 except for different thickness of the lithium-aluminum alloy layer. Their specific compositions are shown in Table 1.

### Examples 11 to 16

Examples 11 to 16 are each a lithium metal battery. They are the same as Example 3 except for a different concentration of electrolyte in the electrolytic solution. Their specific compositions are shown in Table 1.

### Example 17

Example 17 is a lithium metal battery. It is the same as Example 3 except for a different composition of the electrolyte in the electrolytic solution. Its specific composition is shown in Table 1.

### Examples 18 to 21

Examples 18 to 21 are each a lithium metal battery. They are the same as Example 3 except for a different composition of the film-forming agent in the electrolytic solution. Their specific compositions are shown in Table 1.

### Comparative Example 1

This comparative example is a lithium metal battery. It is the same as Examples 1 to 6 except that the negative electrode material layer in this comparative example is a pure lithium layer, that is, a pure lithium belt layer without aluminum added. Its specific composition is shown in Table 1.

### Comparative Example 2

This comparative example is a lithium metal battery. It is the same as Example 17 except that the negative electrode material layer in this comparative example is a pure lithium layer, that is, a pure lithium belt layer without aluminum added. Its specific composition is shown in Table 1.

### Comparative Example 3

This comparative example is a lithium metal battery. It is the same as Example 18 except that the negative electrode material layer in this comparative example is a pure lithium layer, that is, a pure lithium belt layer without aluminum added. Its specific composition is shown in Table 1.

### Comparative Example 4

This comparative example is a lithium metal battery. It is the same as Example 3 except that no film-forming agent is added to the electrolytic solution of this comparative example. Its specific composition is shown in Table 1.

The specific compositions of the lithium metal batteries of Examples 1 to 20 are listed in Table 1. Examples 1 to 20 have the same contents except those shown in Table 1.

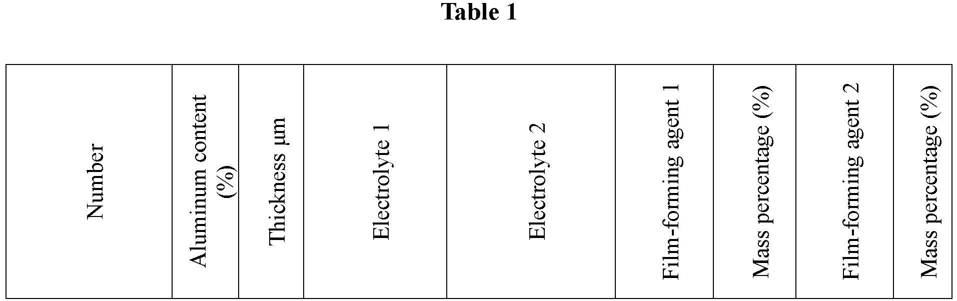

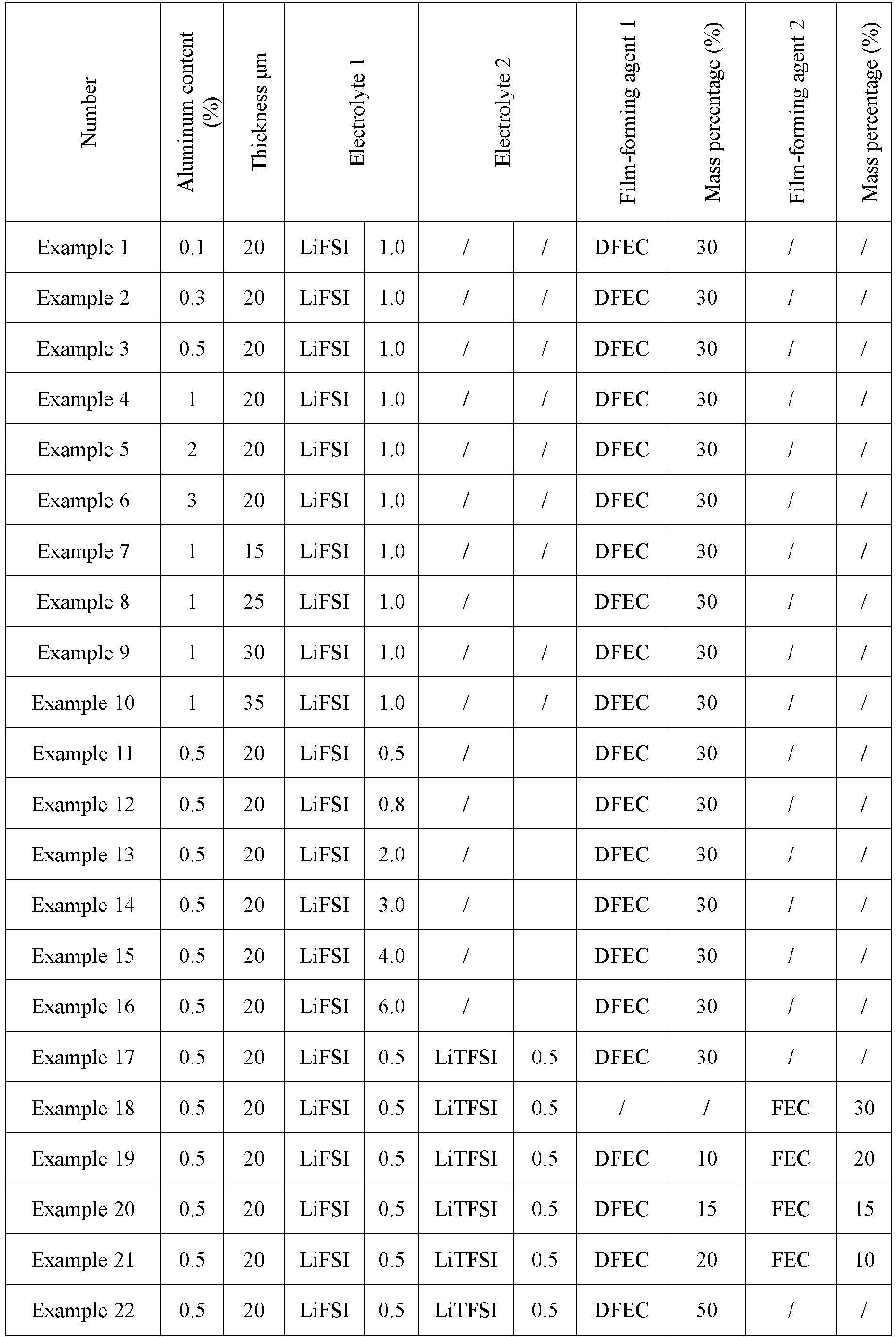

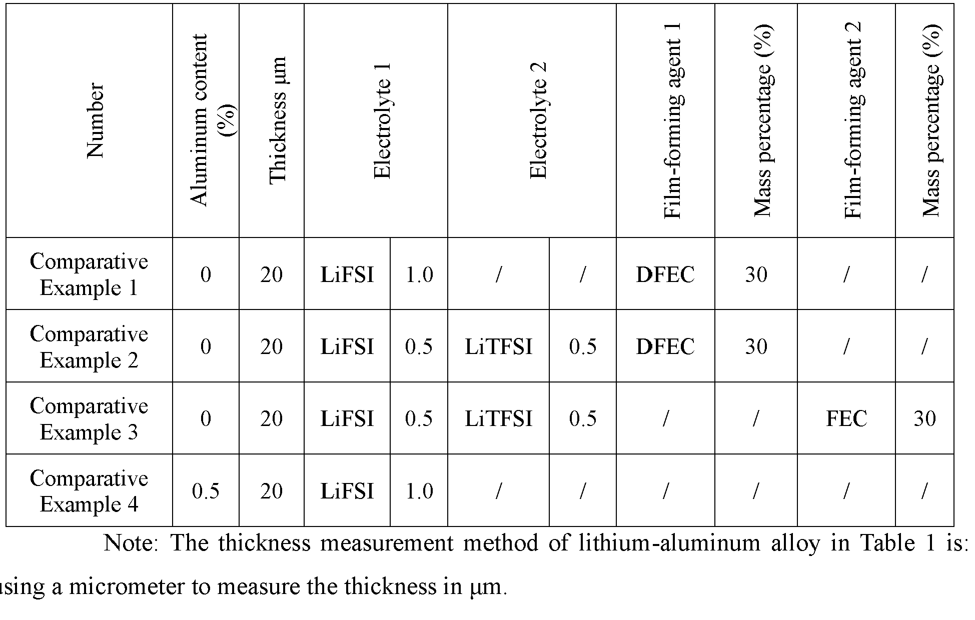

Performance parameters of the lithium metal batteries in Examples 1 to 21 and Comparative Examples 1 to 4 were tested separately. The specific test items and test methods are as follows, and the test results are listed in Table 2.

### Test items and test methods:

Volume swelling: referred to volume change of the cell during charging and discharging. The measurement in this application was the change in thickness of the cell relative to the initial thickness of the cell after full discharge at the 20^{th} cycle. Volume swelling was measured in %.

Quantity of cycles: the NEWARE battery tester was used to perform a charging and discharging test under 25°C room temperature. The battery was charged with 0.5C constant current to 4.3V, then charged with 4.3V constant voltage to 0.05C, and discharged with 0.5C constant current to 2.8V. Then such charging and discharging cycles proceeded in the test.

Median voltage: was the median voltage of discharge. In this application, a ratio of discharge energy to discharge capacity of the third circle was measured.

Adhesion strength test: the adhesion strength was tested by a peel strength tester under a peel angle of 180° and a test speed of 300 mm/min. The adhesion strength between an alloy and lithium metal foil and a current collector was determined based on the peel strength.

**Table 2**

| Number | Adhesion strength (N/mm) | Volume swelling (%) | Quantity of cycles | Median voltage (V) |
|---|---|---|---|---|
| Example 1 | 0.0301 | 39.7 | 202 | 3.78 |
| Example 2 | 0.0281 | 37.5 | 241 | 3.78 |
| Example 3 | 0.0268 | 33.9 | 306 | 3.78 |
| Example 4 | 0.0221 | 28.7 | 294 | 3.76 |
| Example 5 | 0.0136 | 22.6 | 253 | 3.72 |
| Example 6 | 0.0105 | 15.3 | 206 | 3.68 |
| Example 7 | 0.0221 | 28.5 | 238 | 3.78 |
| Example 8 | 0.0221 | 28.9 | 352 | 3.78 |
| Example 9 | 0.0221 | 28.6 | 403 | 3.78 |
| Example 10 | 0.0221 | 28.7 | 458 | 3.78 |
| Example 11 | 0.0268 | 38.2 | 152 | 3.68 |
| Example 12 | 0.0268 | 37.6 | 272 | 3.78 |
| Example 13 | 0.0268 | 37.6 | 292 | 3.76 |
| Example 14 | 0.0268 | 37.6 | 274 | 3.74 |
| Example 15 | 0.0268 | 38.0 | 243 | 3.71 |
| Example 16 | 0.0268 | 38.0 | 207 | 3.60 |
| Example 17 | 0.0268 | 37.3 | 304 | 3.78 |
| Example 18 | 0.0268 | 37.9 | 310 | 3.78 |
| Example 19 | 0.0268 | 37.6 | 318 | 3.78 |
| Example 20 | 0.0268 | 37.8 | 332 | 3.79 |
| Example 21 | 0.0268 | 38.1 | 311 | 3.79 |
| Example 22 | 0.0268 | 38.5 | 288 | 3.75 |
| Comparative Example 1 | 0.0326 | 45.3 | 185 | 3.79 |
| Comparative Example 2 | 0.0326 | 45.3 | 187 | 3.78 |
| Comparative Example 3 | 0.0326 | 46.1 | 168 | 3.79 |
| Comparative Example 4 | 0.0268 | 68.15 | 58 | 3.80 |

Referring to Table 2, it can be seen from the data of Examples 1 to 6 that as the aluminum content in the lithium-aluminum alloy layer increases, the adhesion strength between the lithium-aluminum alloy layer and the negative electrode current collector decreases, and the volume swelling decreases. The aluminum content within a certain range has no effect on the median voltage within a certain range, and when the aluminum content is beyond that range, the median voltage drops significantly.

It can be seen from the data of Example 1 and Examples 7 to 10 that as the thickness of the lithium-aluminum alloy layer increases, the quantity of cycles of the lithium metal battery significantly increases, but the increase in thickness adds to the mass and in turn a lower energy density.

It can be seen from the data of Example 1 and Examples 11 to 16 that as the concentration of the electrolyte lithium salt increases, the quantity of cycles increases and then decreases. This shows that when the electrolyte has a low concentration, the quantity of ions is small and the conductivity is low; and when the electrolyte has a high concentration, viscosity of the electrolytic solution is increased, degrading both conductivity and infiltration of the electrolytic solution, thereby reducing electrical performance of the lithium metal battery.

It can be seen from the comparative data of Example 3 and Example 17 that whether a single-component lithium salt (LiFSI) or a double-component lithium salt (0.5M LiFSI+0.5M LiTFSI) is used has little effect on cycle performance of the system.

It can be seen from the comparative data of Example 17 and Examples 18 to 21 that whether a single-component film-forming agent (DFEC) or a double-component film-forming agent (DFEC+FEC) is used has little effect on cycle performance of the system.

It can be seen from the comparative data of Example 17 and Example 22 that excessive DFEC can, to some extent, reduce conductivity of the electrolytic solution, increase polarization, and reduce cycle performance of the lithium metal battery.

It can be seen from the comparative data of Examples 1 to 22 and Comparative Examples 1 to 4 that electrical performances of the lithium metal batteries of Examples 1 to 22 are all superior to those of Comparative Examples 1 to 4.

Specifically, it can be learned from the comparative data of Examples 1 to 6 and Comparative Example 1, and from the comparative data of Examples 17 to 18 and Comparative Example 2 to 3 that when pure lithium is used in the negative electrode material layer, the volume swelling rates are all above 45%, but the quantities of cycles are below 187, which are much less than the data of Examples 1 to 22.

In addition, it can be learned from the comparative data of Example 3 and Comparative Example 4 that when a lithium-aluminum alloy layer is used as the negative electrode material layer without any film-forming agent added or the type of solvent changed, the electrical performance of the obtained lithium metal battery has little difference from the data of Comparative Examples 1 to 2.

From the above analysis, it can be seen that when a lithium-aluminum alloy is used as the negative electrode, together with DFEC and FEC as the film-forming agent, the electrical performance of the obtained lithium metal battery is much superior to the electrical performance when a lithium-aluminum alloy is used alone or DFEC and FEC are used alone as the film-forming agent. This proves that the synergistic effect of a lithium-aluminum alloy with DFEC and FEC as the film-forming agent can significantly improve the electrical performance of the lithium metal battery.

This application provides a lithium metal battery with good cycle performance and good safety performance, which can solve the problems of poor cycle performance and poor safety performance of conventional lithium metal batteries.

## Claims

1. A lithium metal battery, comprising: a positive electrode, a negative electrode, a separator disposed between the positive electrode and the negative electrode, and an electrolytic solution infiltrating the separator,
wherein the negative electrode comprises a negative electrode current collector and a lithium-aluminum alloy layer composited on at least one surface of the negative electrode current collector; and the electrolytic solution comprises an electrolyte and a solvent, wherein the solvent contains a film-forming agent, and the film-forming agent comprises FEC (fluoroethylene carbonate) and/or DFEC (bisfluoroethylene carbonate),
wherein a mass percentage of the film-forming agent in the solvent is 15% to 55%; wherein the solvent is a combination of one or more of ethylene carbonate, propylene carbonate, butylene carbonate, prenyl carbonate, dimethyl carbonate, diethyl carbonate, dipropyl carbonate, ethyl methyl carbonate and a halogenated derivative thereof;
wherein the electrolyte comprises LiFSI (lithium bisfluorosulfonylimide) and/or LiTFSI (lithium bistrifluoromethanesulfonimide); and,
wherein thickness of the lithium-aluminum alloy layer is 10 µm to 40 µm.

2. The lithium metal battery according to claim 1, wherein a mass percentage of aluminum in the lithium-aluminum alloy layer is 0.1% to 3%, and preferably 0.3% to 2%.

3. The lithium metal battery according to any one of claims 1 and 2, wherein an adhesion strength between the lithium-aluminum alloy layer and the negative electrode current collector is ≥ 0.01 N/mm, wherein the adhesion strength was tested by a peel strength tester under a peel angle of 180° and a test speed of 300 mm/min.

4. The lithium metal battery according to any one of claims 1 to 3, wherein thickness of the lithium-aluminum alloy layer is 15 µm to 30 µm.

5. The lithium metal battery according to any one of claims 1 to 4, wherein a molar concentration of the electrolyte in the electrolytic solution is 0.5 mol/L to 6 mol/L, and preferably 0.8 mol/L to 4 mol/L.

6. The lithium metal battery according to any one of claims 1 to 5, wherein the surface of the negative electrode comprises Li₃N and/or LiF after the lithium metal battery is formatted.

7. The lithium metal battery according to any one of claims 1 to 6, wherein the surface of the negative electrode further comprises lithium oxynitride after the lithium metal battery is formatted.

8. An apparatus, comprising the lithium metal battery according to any one of claims 1 to 7.

## Patentansprüche

1. Lithium-Metall-Batterie, umfassend: eine positive Elektrode, eine negative Elektrode, einen Separator, der zwischen der positiven Elektrode und der negativen Elektrode angeordnet ist, und eine elektrolytische Lösung, die den Separator infiltriert;
wobei die negative Elektrode einen Negativelektroden-Stromabnehmer und eine Lithium-Aluminiumlegierung-Schicht, die auf wenigstens einer Oberfläche des Negativelektroden-Stromabnehmers aufgebaut ist, umfasst und die elektrolytische Lösung einen Elektrolyt und ein Lösungsmittel umfasst, wobei das Lösungsmittel ein filmbildendes Mittel enthält und das filmbildende Mittel FEC (Fluorethylencarbonat) und/oder DFEC (Bisfluorethylencarbonat) umfasst;
wobei ein Masseanteil des filmbildenden Mittels in dem Lösungsmittel 15 % bis 55 % beträgt;
wobei das Lösungsmittel eine Kombination von einem oder mehreren von Ethylencarbonat, Propylencarbonat, Butylencarbonat, Prenylcarbonat, Dimethylcarbonat, Diethylcarbonat, Dipropylcarbonat, Ethylmethylcarbonat und einem halogenierten Derivat davon ist;
wobei der Elektrolyt LiFSI (Lithiumbisfluorsulfonylimid) und/oder LiTFSI (Lithiumbistrifluormethansulfonimid) umfasst; und
wobei die Dicke der Lithium-Aluminiumlegierung-Schicht 10 µm bis 40 µm beträgt.

2. Lithium-Metall-Batterie gemäß Anspruch 1, wobei ein Masseanteil von Aluminium in der Lithium-Aluminiumlegierung-Schicht 0,1 % bis 3 %, vorzugsweise 0,3 % bis 2 %, beträgt.

3. Lithium-Metall-Batterie gemäß einem der Ansprüche 1 und 2, wobei eine Haftfestigkeit zwischen der Lithium-Aluminiumlegierung-Schicht und dem Negativelektroden-Stromabnehmer ≥ 0,01 N/mm beträgt, wobei die Haftfestigkeit mithilfe eines Abziehfestigkeitsprüfers unter einem Abziehwinkel von 180° und mit einer Prüfgeschwindigkeit von 300 mm/min geprüft wurde.

4. Lithium-Metall-Batterie gemäß einem der Ansprüche 1 bis 3, wobei die Dicke der Lithium-Aluminiumlegierung-Schicht 15 µm bis 30 µm beträgt.

5. Lithium-Metall-Batterie gemäß einem der Ansprüche 1 bis 4, wobei eine molare Konzentration des Elektrolyts in der elektrolytischen Lösung 0,5 mol/l bis 6 mol/l, vorzugsweise 0,8 mol/l bis 4 mol/l, beträgt.

6. Lithium-Metall-Batterie gemäß einem der Ansprüche 1 bis 5, wobei die Oberfläche der negativen Elektrode Li₃N und/oder LiF umfasst, nachdem die Lithium-Metall-Batterie formatiert ist.

7. Lithium-Metall-Batterie gemäß einem der Ansprüche 1 bis 6, wobei die Oberfläche der negativen Elektrode ferner Lithiumoxynitrid umfasst, nachdem die Lithium-Metall-Batterie formatiert ist.

8. Vorrichtung, umfassend die Lithium-Metall-Batterie gemäß einem der Ansprüche 1 bis 7.

## Revendications

1. Batterie lithium métal, comprenant : une électrode positive, une électrode négative, un séparateur disposé entre l'électrode positive et l'électrode négative, et une solution électrolytique infiltrant le séparateur,
l'électrode négative comprenant un collecteur de courant d'électrode négative et une couche d'alliage lithium-aluminium formée sur au moins une surface du collecteur de courant d'électrode négative ; et la solution électrolytique comprenant un électrolyte et un solvant, le solvant contenant un agent filmogène, et l'agent filmogène comprenant du FEC (carbonate de fluoroéthylène) et/ou du DFEC (carbonate de bisfluoroéthylène),
un pourcentage en masse de l'agent filmogène dans le solvant étant de 15 % à 55 % ;
le solvant étant une combinaison d'un ou plusieurs parmi le carbonate d'éthylène, le carbonate de propylène, le carbonate de butylène, le carbonate de prényle, le carbonate de diméthyle, le carbonate de diéthyle, le carbonate de dipropyle, le carbonate d'éthyle et de méthyle et un dérivé halogéné correspondant ;
l'électrolyte comprenant LiFSI (bisfluorosulfonylimide de lithium) et/ou LiTFSI (bistrifluorométhanesulfonimide de lithium) ; et,
une épaisseur de la couche d'alliage de lithium-aluminium étant de 10 µm à 40 µm.

2. Batterie lithium métal selon la revendication 1, un pourcentage en masse d'aluminium dans la couche d'alliage de lithium-aluminium étant de 0,1 % à 3 %, et préférablement de 0,3 % à 2 %.

3. Batterie lithium métal selon l'une quelconque des revendications 1 et 2, une force d'adhérence entre la couche d'alliage de lithium-aluminium et le collecteur de courant d'électrode négative étant ≥ 0,01 N/mm, la force d'adhérence ayant été testée par un appareil de test de force de pelage sous un angle de pelage de 180° et une vitesse de test de 300 mm/min.

4. Batterie lithium métal selon l'une quelconque des revendications 1 à 3, une épaisseur de la couche d'alliage de lithium-aluminium étant de 15 µm à 30 µm.

5. Batterie lithium métal selon l'une quelconque des revendications 1 à 4, une concentration molaire de l'électrolyte dans la solution électrolytique étant de 0,5 mole/L à 6 mole/L, et préférablement de 0,8 mole/L à 4 mole/L.

6. Batterie lithium métal selon l'une quelconque des revendications 1 à 5, la surface de l'électrode négative comprenant Li₃N et/ou LiF après que la batterie lithium métal est formatée.

7. Batterie lithium métal selon l'une quelconque des revendications 1 à 6, la surface de l'électrode négative comprenant en outre de l'oxynitrure de lithium après que la batterie lithium métal est formatée.

8. Appareil, comprenant la batterie lithium métal selon l'une quelconque des revendications 1 à 7.
